(19) Europäisches Patentamt
European Patent Office
Office européen des brevets

(11) Veröffentlichungsnummer: **0 150 031**
**A2**

(12) # EUROPÄISCHE PATENTANMELDUNG

(21) Anmeldenummer: 85100333.5

(22) Anmeldetag: 15.01.85

(51) Int. Cl.⁴: A 01 N 47/34

(30) Priorität: 21.01.84 DE 3402074

(43) Veröffentlichungstag der Anmeldung:
31.07.85 Patentblatt 85/31

(84) Benannte Vertragsstaaten:
BE CH DE FR GB IT LI NL SE

(71) Anmelder: BAYER AG
Konzernverwaltung RP Patentabteilung
D-5090 Leverkusen 1 Bayerwerk(DE)

(72) Erfinder: Schlüter, Klemens, Dr. c/o Bayer Singapore Pte.
Maxwell Road P.O.Box 3019
Singapore 9050(SG)

(72) Erfinder: Schnorbach, Hans-Jürgen, Dr.
Adolfstrasse 14
D-5300 Bonn 1(DE)

(54) **Schneckenbekämpfungsmittel.**

(57) Die vorliegende Anmeldung betrifft die Verwendung von Benzoylharnstoffen der allgemeinen Formel (I)

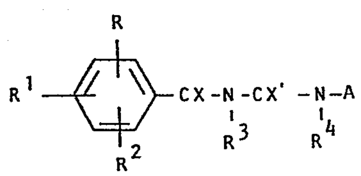

(I)

in welcher
R, $R^1$ und $R^2$ gleich oder verschieden sind und für Wasserstoff, Alkyl, Alkoxy oder Halogen stehen,
$R^3$ und $R^4$ gleich oder verschieden sind und für Wasserstoff, Alkyl, Aralkyl, Aryl, Alkoxy, Aralkoxy, Aryloxy, Alkylthio, Aralkylthio oder Arylthio stehen und
A für einen aromatischen oder heteroaromatischen Rest steht, und
X und X' gleich oder verschieden sind und für Sauerstoff oder Schwefel stehen, als Schneckenbekämpfungsmittel.

EP 0 150 031 A2

Croydon Printing Company Ltd.

BAYER AKTIENGESELLSCHAFT 5090 Leverkusen, Bayerwerk
Konzernverwaltung RP
Patentabteilung S/Kü-c
IIb

## Schneckenbekämpfungsmittel

Die vorliegende Erfindung betrifft die neue Verwendung bestimmter Benzoylharnstoffe zum Schutz von Pflanzen gegen Schäden durch Schneckenfraß.

Es ist bekannt, daß vor allem durch Köder- und Spritzmittel auf der Basis von Metaldehyd und Mercaptodimethur eine breite Abtötung aller landlebenden Schnecken möglich ist. Zahlreiche andere im Pflanzenschutz gebräuchliche Wirkstoffe wirken mehr oder minder spezifisch bei einzelnen Arten. Wie auch bei der Abwehr von Schadvögeln wird im Rahmen integrierter Bekämpfungsmaßnahmen befalls- und fraßabschreckenden Mitteln der Vorzug gegeben. Solche Präparate sind nach Godan, "Schadschnecken", Verlag Ulmer 1979, S. 267 bisher nicht bekannt.

Zahlreiche Benzoylharnstoffe sind als hochwirksame Verbindungen zur Bekämpfung von Arthropoden, insbesondere Insekten bekannt geworden (vgl. z.B. Chemie der Pflanzenschutz- und Schädlingsbekämpfungsmittel, Band 6,

Springer Verlag, Berlin-Heidelberg-New York, 1981, Seiten 423 bis 464).

In Freilandversuchen hat sich nun überraschenderweise gezeigt, daß bestimmte Bezoylharnstoffe, vorzugsweise als Spritzmittel ausgebracht, repellierend und fraßabschreckend gegen landlebende Nackt- und Gehäuseschnecken wirken und so die behandelten Pflanzen vor Schaden schützen können.

Es wurde gefunden, daß die Benzoylharnstoffe der allgemeinen Formel

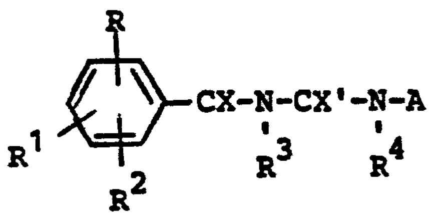

(I)

in welcher

R, $R^1$ und $R^2$ gleich oder verschieden sind und für Wasserstoff, Alkyl, Alkoxy oder Halogen stehen,

$R^3$ und $R^4$ gleich oder verschieden sind und für Wasserstoff, Alkyl, Aralkyl, Aryl, Alkoxy, Aralkoxy, Aryloxy, Alkylthio, Aralkylthio oder Arylthio stehen und

A für einen aromatischen oder heteroaromatischen Rest steht und

X und X' gleich oder verschieden sind und für Sauerstoff oder Schwefel stehen,

repellierend und fraßabschreckend gegen landlebende Nackt- und Gehäuseschnecken wirken und somit zum Schutz von Kultur- und Zierpflanzen vor Schäden durch Schneckenfraß verwendet werden können.

Bevorzugt werden Verbindungen der allgemeinen Formel (I) eingesetzt, in welcher die angegebenen Reste die im folgenden erläuterten Bedeutungen haben:

Die Alkyl und Alkoxyreste R, $R^1$ und $R^2$ sind geradkettig oder verzweigt und enthalten jeweils vorzugsweise 1 bis 6, besonders bevorzugt 1 bis 4 und ganz besonders bevorzugt 1 oder 2 Kohlenstoffatome. Beispielhaft seien Methyl, Ethyl, Methoxy und Ethoxy genannt.

Halogen, R, $R^1$ und $R^2$ bedeutet Fluor, Chlor, Brom und Jod, vorzugsweise Fluor und/oder Chlor.

Vorzugsweise steht wenigstens einer der Reste R, $R^1$ und $R^2$ für Wasserstoff und die beiden übrigen Reste stehen in 2,4-, 2,5- oder besonders bevorzugt in der 2,6-Stellung. Falls zwei der Reste R, $R^1$ und $R^2$ Wasserstoff bedeuten, steht der übrige Rest bevorzugt in der 2-Stellung des Phenylringes.

Die Alkyl-, Alkoxy- und Alkylthioreste $R^3$ und $R^4$ sind geradkettig oder verzweigt und enthalten vorzugsweise 1 bis 6, insbesondere 1 bis 4 und besonders bevorzugt 1 oder 2 Kohlenstoffatome. Beispielhaft seien Methyl, Ethyl, Mehoxy, Ethoxy, Methylthio und Ethylthio genannt.

Als Aryl, Aryloxy und Arylthio $R^3$ und $R^4$ stehen vorzugsweise Phenyl, Phenoxy und Phenylthio, wobei diese Reste ein- oder mehrfach substituiert sein können. Beispielhaft seien genannt 2-Chlor-4-methylphenyl, 4-Nitrophenoxy und 4-Chlorphenylthio.

In den Aralkyl-, Aralkoxy- und Aralkylthioresten $R^3$ und $R^4$ bedeuten die Arylteile vorzugsweise Phenyl. Die Alkylteile enthalten vorzugsweise 1 bis 4, insbesondere 1 oder 2 Kohlenstoffatome. Diese Reste können im Aryl- und/oder Alkylteil 1- oder mehrfach, vorzugsweise 1 bis 3-fach substituiert sein. Beispielhaft seien genannt: Benzyl, 2-Methyl-4-chlorphenylethyl, Benzyloxy und Benzylthio.

Bevorzugt stehen $R^3$ und $R^4$ für Wasserstoff.

X und X' stehen bevorzugt für Sauerstoff.

Als aromatischer Rest A steht vorzugsweise ein Phenylrest, welcher durch 1 oder mehrerer, vorzugsweise 1 bis 3, insbesondere 1 oder 2 gleich oder verschiedene Reste substituiert sein kann.

Der heteroaromatische Rest A ist vorzugsweise ein 5- oder 6-gliedriger Ring mit 1 oder mehreren, vorzugsweise 1 bis 3, insbesondere 1 oder 2 gleichen oder verschiedenen Heteroatomen, wie Sauerstoff, Schwefel und/oder Stickstoff, wobei der heteroaromatische Rest A ein oder mehrfach, vorzugsweise 1- bis 3-, insbesondere 1- oder 2-fach durch gleiche oder verschiedene Substituenten substituiert sein kann. Als heteroaromatische Ringe seien beispielhaft Pyridin-, Pyrimidin-, Pyrazol-, Imidazol-, Triazol-, Oxazol-, Thiazol- und Furazon-Ringe aufgeführt. Bevorzugt sei der Pyridylring genannt, wobei der Pyridylring auch in Form des N-Oxides vorliegen kann.

Als Substituenten des aromatischen oder heteroaromatischen Restes A seien beispielhaft aufgeführt: Alkyl mit vorzugsweise 1 bis 4, insbesondere 1 oder 2 Kohlenstoffatomen, wie Methyl, Ethyl, n- und i-Propyl und n-, i- und t-Butyl; Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome , vorzugsweise Fluor, Chlor oder Brom, insbesondere Fluor stehen, wie Trifluormethyl; Halogenalkoxy oder Halogenalkylthio mit vorzugsweise 1 bis 6, insbesondere 1 bis 4 und besonders bevorzugt 1 oder 2 Kohlenstoffatomen und vorzugsweise 1 bis 5, insbesondere 1 bis 3 gleiche oder verschiedene Halogenatome, wie Fluor, Chlor oder Brom, z.B. Trifluormethoxy, Trifluormethylthio sowie die Reste $OCHF_2$, $OCF_2$-$CHCl_2$, -$OCF_2$-$CHF_2$, -$OCF_2$-$CHF_2$ und -$OCF_2CHFCF_3$; Alkenyl- und Alkinylgruppen mit vorzugsweise bis zu 4 Kohlenstoffatomen, welche durch Halogen, wie Fluor und/oder Chlor substituiert sein können; Alkenyloxy und Alkinyloxygruppen mit bis zu 4 Kohlenstoffatomen, welche durch Halogen substituiert sein können; Hydroxy; Halogen, vorzugsweise Fluor, Chlor, Brom und Jod, insbesondere Chlor und Brom; Cyano; Nitro; Amino; Monoalkyl- und Dialkylamino mit vorzugsweise 1 bis 4, insbesondere 1 oder 2 Kohlenstoffatomen je Alkylgruppe, wie Methylamino, Methyl-ethyl-amino, n- und i-Propylamino und Methyl-n-Butylamino; Carboxyl; Carbalkoxy mit vorzugsweise 2 bis 4, insbesondere 2 oder 3 Kohlenstoffatomen, wie Carbomethoxy und Carboethoxy; Sulfo (-$SO_3H$); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl; sowie die Gruppen -O-$CQ_2$-$OCQ_2$-, -$OCQ_2$-O-, und -O-$CQ_2$-$CQ_2$-O-, in welchen Q für Wasserstoff und/oder gleiche oder verschiedene Halogenatome (vorzugsweise Fluor oder Chlor) stehen, wie -O-$CF_2$-O-$CF_2$-, -O-$CF_2$O-, -$OCF_2$-$CF_2$O- oder -O-$CF_2$-CFCl-O-, wobei diese Gruppen

mit den Atomen der aromatischen oder heteroaromatischen Ringe A, an welche sie gebunden sind, 5 oder 6-gliedrige Ringe bilden.

Anstelle der oder zusätzlich zu den oben aufgeführten Substituenten können die aromatischen oder heteroaromatischen Reste A einen Substituenten der allgemeinen Formel

-Y-B

enthalten, in welcher

Y für Sauerstoff, Schwefel, Alkylen mit 1 bis 4 (vorzugsweise 1 oder 2) Kohlenstoffatomen, die -N=N-Gruppe oder für eine direkte Bindung steht und

B für einen aromatischen oder heteroaromatischen Rest steht.

Der Rest B hat vorzugsweise die Bedeutung, welche oben für den aromatischen oder heteroaromatischen Rest A angegeben ist. Der aromatische oder heteroaromatische Rest B kann einen oder mehrere, vorzugsweise 1 bis 5, insbesondere 1 bis 3, gleiche oder verschiedene Substituenten tragen, wobei vorzugsweise die beim Rest A angegebenen Substituenten in Frage kommen.

Bevorzugt werden erfindungsgemäß Verbindungen der allgemeinen Formel (II) eingesetzt:

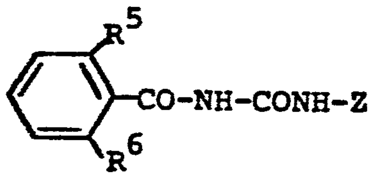 ,  (II)

in welchen

$R^5$ für Wasserstoff, Methyl, Methoxy oder Halogen (vorzugsweise Fluor oder Chlor) steht,

$R^6$ für Methyl, Methoxy oder Halogen (vorzugsweise Fluor oder Chlor) steht und

Z für gegebenenfalls substituierte Reste aus der Reihe Phenyl, Pyridyl, Pyridyl-N-oxid, Oxazolyl, Phenoxyphenyl, Pyridyloxyphenyl, Phenylazobenzol oder Phenylpyrimidin steht.

Besonders bevorzugt steht Z für den Phenylrest, den Phenoxyphenylrest oder den Pyridyloxyphenylrest und ganz besonders bevorzugt für den Phenylrest.

Als Substituenten in den Resten Z können 1 oder mehrere, vorzugsweise 1 bis 4, insbesondere 1 bis 3 gleiche oder verschiedene der als Substituenten der Reste A und B angegebenen Substituenten stehen.

Besonders bevorzugte Substituenten in den Resten Z sind Halogen (vorzugsweise Fluor und/oder Chlor), Nitro, Cyano, $C_1$-$C_4$-Alkyl, welches durch Fluor und/oder Chlor

substituiert sein kann (wie $CH_3$ oder $CF_3$), $C_1$-$C_4$-Halogenalkoxy (wie $OCF_3$ oder $OCF_2$-$CHCl_2$), $C_1$-$C_4$-Halogenalkylthio (wie $SCF_3$) oder $-O-CQ_2-CQ_2-O-$, worin Q gleich oder verschieden ist und für Wasserstoff, Fluor oder Chlor steht (wie $-O-CF_2-CF_2-O-$ oder $-O-CF_2-CFCl-O-$).

Als erfindungsgemäß verwendbare Benzoylharnstoffe können z.B. die folgenden Verbindungen aufgeführt werden:

Formel: Verbindung Nr.:

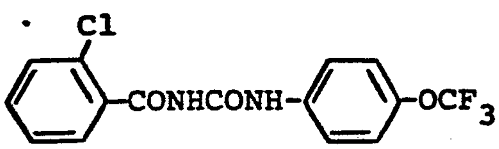

1

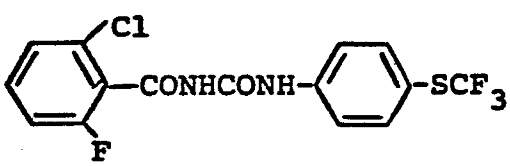

2

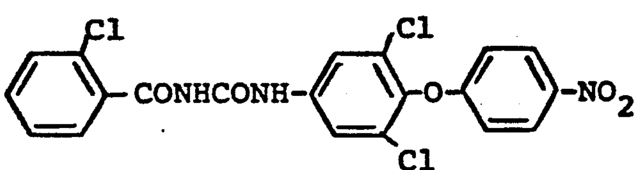

3

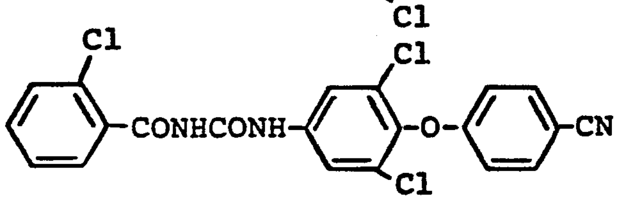

4

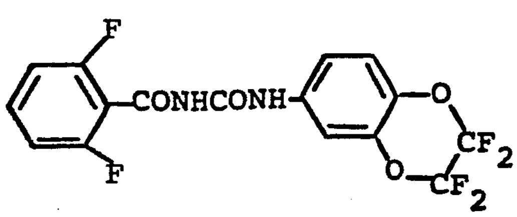

5

Formel: Verbindung Nr.:

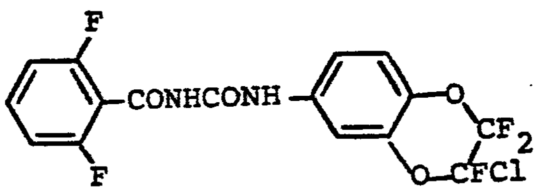

6

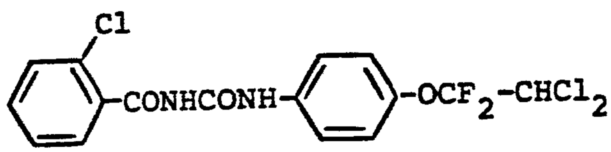

7

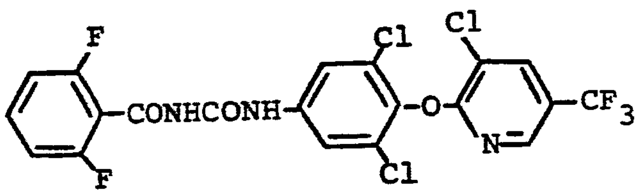

8

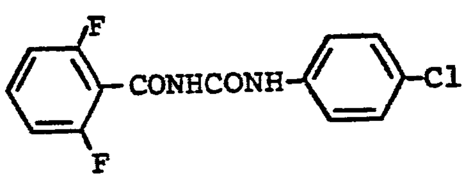

9

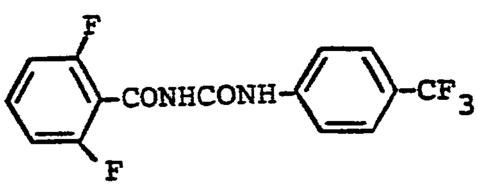

10

| Formel: | Verbindung Nr.: |
|---|---|
| 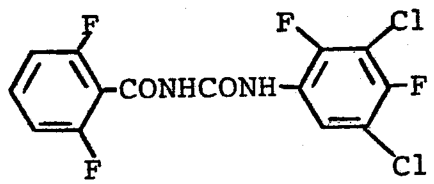 | 11 |
| 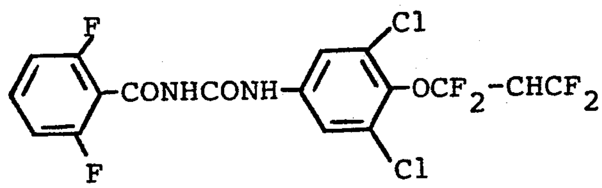 | 12 |

Die erfindungsgemäß verwendbaren Benzoylharnstoffe der allgemeinen Formel (I) sind (als Insektizide) bekannt und/oder können nachallgemein bekannten Methoden erhalten werden, vgl. z.B. (PS=Patentschrift):

DE-A-24 387 47
US-PS 3 992 553
DE-A-2 504 982
DE-A-2 504 984
DE-A-2 504 983 (US-PS 4 041 177)
DE-A-2 528 917
DE-A-2 531 202 (US-PS 4 068 002)
DE-A-2 531 279 (US-PS 4 085 226)
DE-A-2 537 413 (US-PS 4 005 223)
DE-A-2 601 780 (US-PS 4 139 636)
DE-A-2 637 947 (US-PS 4 103 022)
DE-A-2 638 233 (US-PS 4 194 005)
DE-A-2 801 316 (US-PS 4 277 499)
DE-A-2 837 086 (US-PS 4 276 310)
US-PS 4 234 600
DE-A-3 023 328
DE-A-2 123 236 (US-PS 3 748 356)
US-PS 4 399 152
US-PS 4 170 657
EP-PS 23 884
DE-A-3 314 383
EP-Anmeldung Nr. 31 974
US-PS 4 405 552
DE-A-3 033 512 (US-PS 4 310 530)

EP-Anmeldung Nr. 38 776
US-PS 4 310 694
US-PS 4 310 548
DE-A-3 026 825
EP-PS 13 414 (DE-A-2 901 334 und DE-A-2 927 123)
DE-A-3 003 112
DE-PS 3 235 419
EP-Anmeldung Nr. 55 213
EP-Anmeldung Nr. 56 124
EP-Anmeldung Nr. 71 279
EP-Anmeldung Nr. 30 518
EP-Anmeldung Nr. 44 278
DE-A-3 044 055
EP-PS 8880
Jap. Anmeldung Nr. 3 023 871
Jap. Anmeldung Nr. 3 023 872
US-PS 4 380 641
EP-Anmeldung Nr. 79 311
Jap. Anmeldung Nr. 58 03 51 63
Jap. Anmeldung Nr. 58 03 51 74
US-PS 4 380 641
DE-A-2 928 410
US-PS 4 293 552
DE-A-3 133 009
EP-Anmeldung 52 833
DE-A-3 233 383
EP-Anmeldung Nr. 74 074
DE-A-3 241 138
EP-Anmeldung Nr. 23 884
Jap. Anmeldung Nr. 58 07 25 66

EP-Anmeldung Nr. 38 776
EP-Anmeldung Nr. 88 343
EP-Anmeldung Nr. 70 130
US-PS 4 405 552
EP-Anmeldung Nr. 14 674
Jap. Anmeldung Nr. 83 04 09 46
Jap. Anmeldung Nr. 83 04 09 47
US-PS 4 321 276
EP-Anmeldung Nr. 40 179
EP-Anmeldung Nr. 35 084
EP-PS 40 30
EP-Anmeldung Nr. 42 732
EP-Anmeldung Nr. 44 410
US-PS 4 321 388
US-PS 4 323 579
US-PS 4 321 276
EP-Anmeldung Nr. 50 321
US-PS 4 323 579
DE-A-3 046 672
DE-A-3 141 232
US-PS 4 336 264
DE-A-3 126 263
US-PS 4 344 951
US-PS 4 350 706
US-PS 4 348 412
US-PS 4 353 925
EP-Anmeldung Nr. 8 768
EP-Anmeldung Nr. 8 881
EP-Anmeldung Nr. 65 487
EP-Anmeldung Nr. 63 413
US-PS 4 348 412

EP-Anmeldung Nr. 60 071
EP-Anmeldung Nr. 25 363
US-PS 4 338 321
EP-Anmeldung Nr. 57 888
DE-A-3 104 407
US-PS 4 366 155
EP-Anmeldung Nr. 72 438
Jap. Anmeldung Nr. 57 17 51 58
Jap. Anmeldung Nr. 57 16 33 66
Jap. Anmeldung Nr. 82 05 37 86
Jap. Anmeldung Nr. 57 14 42 58
Jap. Anmeldung Nr. 57 12 86 71
Jap. Anmeldung Nr. 57 03 16 64
Jap. Anmeldung Nr. 57 06 46 04
Jap. Anmeldung Nr. 57 18 85 61
DE-A-3 223 505
DE-A-3 217 620
DE-A-3 217 619
DE-A-3 309 987
DE-A-3 311 703

Die Benzoylharnstoffe der allgemeinen Formel (I) weisen Eigenschaften auf, die ihren Einsatz zur Bekämpfung von Schnecken ermöglichen. Die repellierende und fraßabschreckende Wirkung dieser Verbindungen ist im Laborversuch häufig nur schwierig und bei höheren Dosierungen erkennbar. Im Freiland werden jedoch in landwirtschaftlichen und gärtnerischen Pflanzenkulturen auch bei sehr niedrigen Aufwandmengen hervorragende

Wirkungen beobachtet. Bevorzugt werden empfindliche Salat-, Gemüse- und Obstkulturen (wie Erdbeerkulturen) sowie die Kulturen von Zierpflanzen und Blumen gegen den Schneckenfraß geschützt.

Die Wirkung der erfindungsgemäß verwendbaren Benzoylharnstoffe erstreckt sich auf alle landlebenden Nackt- und Gehäuseschnecken, welche in der Mehrzahl als polyphage Schädlinge landwirtschaftlicher und gärtnerischer Kulturen auftreten. Zu ihnen gehören einige besonders wichtige Schädlinge wie z.B. die Nacktschnecken Arion rufus (Große Wegschnecke); Arion ater und andere Arionidae, Limax-Arten und die Ackerschnecken, u. a. Deroceras reticulatum und D. agreste aus der Familie Limacidae, sowie Arten aus der Familie Milacidae. Weiterhin schädigen auch die Gehäuseschnecken u.a. der Gattungen Bradybaena, Cepaea, Cochlodina, Discus, Euomphalia, Galba, Helicigona, Helix, Helicella, Helicodiscus, Lymnaea, Opeas, Vallonia und Zonitoides.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage:

z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise durch die Ausbringung der Wirkstoffe auf die Pflanzen oder auf die Umgebung der zu schützenden Pflanzen, z.B. auf die Erde. Bevorzugt

werden die Wirkstoffe auf die zu schützenden Pflanzen appliziert, wobei die Aufbringung im Spritzverfahren ganz besonders bevorzugt wird.

Je Hektar Kulturfläche werden vorzugsweise 10 bis 1000 g, insbesondere 25 bis 300 g und ganz besonders bevorzugt 40 bis 150 g Wirkstoff eingesetzt.

Die Wirksamkeit der erfindungsgemäß verwendbaren Benzoylharnstoffe der allgemeinen Formel (I) kann durch die folgenden Beispiele erläutert werden (alle %-Angaben betreffen Gewichtsprozente):

## A) Laborversuche

### Beispiel 1

Unter kontrollierten Versuchsbedingungen werden je 5 Nacktschnecken (Arion rufus) in einem Käfig mit 4 frischen Salatblättern über 17 Stunden belassen. Es handelt sich hierbei um Zwangsversuche, bei denen entweder nur durch eine Spritzapplikation behandelte oder unbehandelte Blätter angeboten werden. Die Wirkstoffkonzentration in der Spritzbrühe beträgt 0,5 %. Das Ausmaß des Fraßes wird anhand von Gewichtsdifferenzen, Fotokopien des Fraßbildes und nach augenscheinlichen Beurteilungskriterien ermittelt.

Bei den z.B. mit den oben erwähnten Verbindungen Nr. 1 und 6 behandelten Blättern war der Fraß gegenüber der unbehandelten Kontrolle stark reduziert; die behandelten Blätter waren meist unversehrt oder wiesen nur geringe Fraßspuren auf, während die unbehandelten Blätter sehr starke Fraßschäden zeigten.

### Beispiel 2

Auch bei erschwerten Prüfbedingungen, nun im Wahlversuch, läßt sich die fraßabschreckende Wirkung der Benzoylharnstoffe nachweisen. Junge Salatpflanzen werden mit Spritzbrühe behandelt (Wirkstoffkonzentration 0,1 %) und in Schneckenversuchskästen mit 0,25 $m^2$ Grundfläche gepflanzt. Je 2 behandelte und 2 unbehandelte Salatpflanzen befinden sich diagonal gegenüber in den Ecken des Versuchskastens. Der Schneckenbesatz pro Kasten beträgt 5 Nacktschnecken (Arion rufus). Die Kontrolle des Fraßes erfolgt an 5 aufeinanderfolgenden Tagen.

Deutlich verminderter Fraß gegenüber den unbehandelten Kontrollpflanzen ließ sich an den Salatpflanzen ermitteln, die beispielsweise mit den oben erwähnten Verbindungen Nr. 6 und 7 behandelt waren.

B. Freilandversuche

Beispiel 3

Gleichgroße zufällig auf der Versuchsfläche verteilte Parzellen werden mehrfach mit den Versuchspräparaten behandelt. 7 Tage nach letzter Behandlung erfolgt eine visuelle Bonitierung des Schneckenfraßes an jeweils 24 Salatpflanzen pro Parzelle. Der Fraßgrad ist in % Schaden ausgedrückt.

| Wirkstoff Verbindung Nr. | Aufwandmenge kg Wirkstoff/ha | Fraßgrad in % |
|---|---|---|
| 1 | 0,3 | 8 |
| 6 | 0,05 | 1 |
| unbehandelte Kontrolle | - | 30 |

Patentansprüche

1. Schneckenbekämpfungsmittel, gekennzeichnet durch den Gehalt an wenigstens einem Benzoylharnstoff der allgemeinen Formel (I)

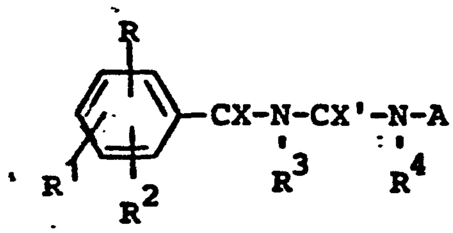

(I)

in welcher

$R$, $R^1$ und $R^2$ gleich oder verschieden sind und für Wasserstoff, Alkyl, Alkoxy oder Halogen stehen,

$R^3$ und $R^4$ gleich oder verschieden sind und für Wasserstoff, Alkyl, Aralkyl, Aryl, Alkoxy, Aralkoxy, Aryloxy, Alkylthio, Aralkylthio oder Arylthio stehen und

A für einen aromatischen oder heteroaromatischen Rest steht und

X und X' gleich oder verschieden sind und für Sauerstoff oder Schwefel stehen.

2. Schneckenbekämpfungsmittel gemäß Anspruch 1, gekennzeichnet durch den Gehalt an wenigstens einen Benzoylharnstoff der allgemeinen Formel (II)

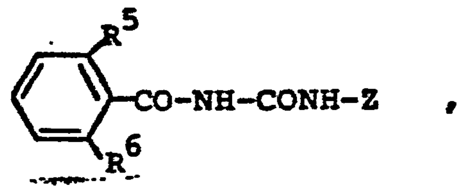

(II)

in welchen

$R^5$ für Wasserstoff, Methyl, Methoxy oder Halogen steht,

$R^6$ für Methyl, Methoxy oder Halogen steht und

Z für gegebenenfalls substituierte Reste aus der Reihe Phenyl, Pyridyl, Pyridyl-N-oxid, Oxazolyl, Phenoxyphenyl, Pyridyloxyphenyl, Phenylazobenzol oder Phenylpyrimidinyl steht.

3. Schneckenbekämpfungsmittel gemäß Anspruch 2, wobei die Reste Z der allgemeinen Formel (II) durch einen oder mehrere, gleiche oder verschiedene Substituenten aus der Reihe Halogen, Nitro, Cyano, $C_1$-$C_4$-Alkyl, welches durch Fluor und/oder Chlor substituiert sein kann, $C_1$-$C_4$-Halogenalkoxy, $C_1$-$C_4$-Halogenalkylthio oder $-O-CQ_2-CQ_2-O-$, worin Q gleich oder verschieden ist und für Wasserstoff, Fluor oder Chlor steht, substituiert sein können.

4. Schneckenbekämpfungsmittel gemäß den Ansprüchen 2 oder 3, wobei Z für Phenyl, Phenoxyphenyl oder Pyridyloxyphenyl steht.

5. Verwendung von Benzoylharnstoffen der allgemeinen Formel (I)

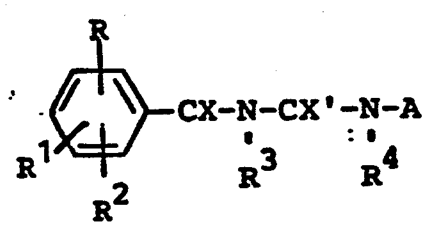

(I)

in welcher

R, $R^1$ und $R^2$ gleich oder verschieden sind und für Wasserstoff, Alkyl, Alkoxy oder Halogen stehen,

$R^3$ und $R^4$ gleich oder verschieden sind und für Wasserstoff, Alkyl, Aralkyl, Aryl, Alkoxy, Aralkoxy, Aryloxy, Alkylthio, Aralkylthio oder Arylthio stehen und

A für einen aromatischen oder heteroaromatischen Rest steht und

X und X' gleich oder verschieden sind und für Sauerstoff oder Schwefel stehen,

zum Schutz von Pflanzen vor Schäden durch Schnecken.

6. Verwendung von Benzoylharnstoffen der allgemeinen Formel (II)

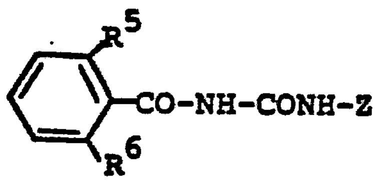

, (II)

in welchen

$R^5$ für Wasserstoff, Methyl, Methoxy oder Halogen steht,

$R^6$ für Methyl, Methoxy oder Halogen steht und

Z für gegebenenfalls substituierte Reste aus der Reihe Phenyl, Pyridyl, Pyridyl-N-oxid, Oxazolyl, Phenoxyphenyl, Pyridyloxyphenyl, Phenylazobenzol oder Phenylpyrimidinyl steht,

zum Schutz vor Pflanzen vor Schäden durch Schnecken.

7. Verwendung gemäß Anspruch 6, wobei die Reste Z der allgemeinen Formel (II) durch einen oder mehrere, gleiche oder verschiedene Substituenten aus der Reihe Halogen, Nitro, Cyano, $C_1$-$C_4$-Alkyl, welches durch Fluor und/oder Chlor substituiert sein kann, $C_1$-$C_4$-Halogenalkoxy, $C_1$-$C_4$-Halogenalkylhio oder $-O-CQ_2-CQ_2-O-$, worin Q gleich oder verschieden ist und für Wasserstof, Fluor oder Chlor steht, substituiert sein können.

8. Verwendung gemäß den Ansprüchen 6 und 7, wobei Z für Phenyl, Phenoxyphenyl oder Pyridyloxyphenyl steht.

9. Verfahren zum Schutz von Pflanzen vor Schäden durch Schnecken, dadurch gekennzeichnet, daß man die zu schützenden Pflanzen oder ihre Umgebung mit Benzoylharnstoffen der in Anspruch 1 oder 5 anangegebenen allgemeinen Formel (I) behandelt.

10. Verfahren zur Herstellung von Schneckenbekämpfungsmitteln, dadurch gekennzeichnet, daß man Benzoylharnstoffe der in Anspruch 1 oder 5 angegebenen allgemeinen Formel (I) mit inerten Verdünnungsmitteln und/oder oberflächenaktiven Stoffen vermischt.